# EUROPÄISCHE PATENTSCHRIFT

(11) **EP 3 791 103 B1**
(45) Veröffentlichungstag und Bekanntmachung des Hinweises auf die Patenterteilung: **04.12.2024**
(21) Anmeldenummer: 19765995.6
(22) Anmeldetag: 06.09.2019
(51) Int. Cl.: F16L 33/207

(54) **ANSCHLUSSKUPPLUNG**
CONNECTION COUPLING
COUPLAGE DE CONNEXION

(30) Priorität: 06.09.2018 DE 202018105108 U
(43) Veröffentlichungstag der Anmeldung: 17.03.2021
(73) Patentinhaber: Neoperl GmbH, 79379 Müllheim (DE)
(72) Erfinder: KURY, Werner, 79379 Müllheim (DE)
(74) Vertreter: Mertzlufft-Paufler, Cornelius
(86) Internationale Anmeldenummer: PCT/EP2019/073849
(87) Internationale Veröffentlichungsnummer: WO 2020/049160

(56) Entgegenhaltungen:
- US-A- 2 139 745
- US-A- 2 147 355
- US-A- 589 216
- US-A1- 2017 241 579

## Beschreibung

Die Erfindung betrifft eine Anschlusskupplung für einen Schlauch mit einem Schlauchnippel, an welchem eine Rippenstruktur mit wenigstens einer Rippe ausgebildet ist, wobei die wenigstens eine Rippe in ihrem Verlauf wenigstens eine Richtungsänderung zur Verdrehsicherung aufweist.

Es ist bekannt, Rippen an Schlauchnippeln auszubilden, um Zugkräfte zu übertragen. Zur Verbesserung der Verdrehsicherheit ist vorgeschlagen worden, zwischen zwei Rippen Nuten auszubilden, deren Nutgrund von einer Rotationssymmetrie abweicht. Es ist auch vorgeschlagen worden, Rippen mit einer unrunden Umfangskontur, also mit einer Umfangskontur, die nicht durch einen Zylinderwand beschreibbar ist, zu fertigen. Die Fertigung derartiger Profile ist jedoch häufig aufwändig.

Beispiele von für die Erfindung relevanten Anschlusskupplungen für Schläuche sind beispielsweise aus US 10 107 430 B2 und US 2 139 745 A vorbekannt.

Hiervon ausgehend liegt der Erfindung die Aufgabe zugrunde, eine Rippenstruktur zu schaffen, die als technische Alternative zu vorbekannten Lösungen sowohl eine verbesserte Verdrehsicherheit bereitstellt, wobei gleichzeitig übertragbare Zugkräfte erhalten bleiben sollen.

Erfindungsgemäß sind zur Lösung der Aufgabe die Merkmale von Anspruch 1 vorgesehen. Insbesondere wird somit erfindungsgemäß bei einer Anschlusskupplung der eingangs beschriebenen Art vorgeschlagen, dass die wenigstens eine Rippe wenigstens einen Halteabschnitt zur Aufnahme von Zugkräften aufweist, der in einer Radialebene verläuft, die senkrecht auf einer Längsachse des Schlauchnippels steht, dass ferner die wenigstens eine Rippe um den Schlauchnippel umlaufend ausgebildet ist, dass die Rippenstruktur eine um den Schlauchnippel umlaufende weitere Rippe hat, die in ihrem Verlauf wenigstens eine Richtungsänderung aufweist, und dass die beiden Rippen zueinander vollständig beabstandet angeordnet sind, sodass ein in der Radialebene umlaufender Bereich zwischen den beiden Rippen an dem Schlauchnippel rippenfrei ausgestaltet ist. Somit wird auf einfache Weise erreicht, dass die Rippe wenigstens einen Rippenabschnitt aufweist, der quer zur Umfangsrichtung des Schlauchnippels verläuft und so eine Verdrehsicherung realisieren kann. Die wenigstens eine Rippe weist dabei in ihrem Verlauf wenigstens eine Richtungsänderung aus der Umfangsrichtung des Schlauchnippels auf. Diese Richtungsänderung kann beispielsweise dadurch charakterisiert werden, dass die Rippe in ihrem Verlauf wenigstens einmal eine Richtungsänderung in einer axialen Richtung erfährt. Ergänzend wird bei einer Anschlusskupplung der eingangs beschriebenen Art vorgeschlagen, dass die Rippe einen ersten Rippenabschnitt und einen zweiten Rippenabschnitt aufweist, wobei sich der erste Rippenabschnitt an eine erste Verlaufsrichtung und der zweite Rippenabschnitt sich an eine zweite Verlaufsrichtung anschmiegt, und dass die erste Verlaufsrichtung in einem Winkel zu der zweiten Verlaufsrichtung ausgerichtet ist. Auf diese Weise ist einfach erreichbar, dass zumindest einer der beiden Rippenabschnitte nicht parallel zur Umfangsrichtung ausgerichtet ist und somit auf einfache Weise eine Verdrehsicherung realisierbar ist. Der Winkel kann hierbei beispielsweise zwischen 30° und 120°, bevorzugt zwischen 45° und 105°, liegen. Durch die unterschiedlichen Verlaufsrichtungen des ersten Rippenabschnitts und des zweiten Rippenabschnitts wird auf einfache Weise erreicht, dass die Rippe in ihrem Verlauf eine Richtungsänderung, nämlich beispielsweise von der ersten Verlaufsrichtung zu der zweiten Verlaufsrichtung, aufweist. Dieser Winkel kann beispielsweise an einer vom Grundkörper gedanklich in eine Ebene abgewickelten Rippe definiert sein, d.h. es kann bei der Bestimmung des Winkels von dem Einfluss der gebogenen Oberfläche des Grundkörpers abgesehen sein.

Bei einer Ausgestaltung der Erfindung kann die wenigstens eine Rippe eine Richtungsänderung aufweisen, die einem Winkel von mehr als 90° entspricht und beispielsweise zwischen 120° und 150°, insbesondere zwischen 130° und 140°, liegen kann. Allgemein kann das Anschmiegen hierbei beispielsweise ein infinitesimales Folgen, also beispielsweise ein Folgen bis auf Abweichungen höherer Ordnung, oder ein genaues Folgen sein.

Mit der Erfindung ist vorteilhaft erreichbar, dass die übertragbaren Zugkräfte zumindest erhalten bleiben.

Die Rippenabschnitte können hierbei gekrümmt sein, wobei in diesem Fall die Verlaufsrichtung als Tangente an den Rippenabschnitt infinitesimal definiert ist. Die Rippenabschnitte können auch geradlinig oder in einer Ebene liegend ausgeführt sein, wobei in diesem Fall die Verlaufsrichtung parallel zu dem Rippenabschnitt definiert ist. Mit anderen Worten kann das infinitesimale Folgen der Verlaufsrichtung durch die Rippe im jeweiligen Rippenabschnitt dadurch charakterisiert werden, dass Abweichungen der Rippe von der Verlaufsrichtung mehr als linear, beispielsweise quadratisch oder mehr als quadratisch oder exponentiell, von der Entfernung vom Fußpunkt der Tangente an der Rippe anwachsen.

Ergänzend wird bei einer Anschlusskupplung der eingangs beschriebenen Art vorgeschlagen, dass die wenigstens eine Rippe als kreuzungsfrei umlaufende Rippe ausgebildet ist und in mindestens einem Rippenabschnitt schräg verläuft in Bezug auf eine Umfangsrichtung des Schlauchnippels. Eine solche Schrägstellung kann ein Mittel sein, eine gewünschte Verdrehsicherung auszubilden. Eine kreuzungsfrei verlaufende Rippe hat den Vorteil, dass Zwickel, die sich an Kreuzungspunkten ergeben, vermeidbar sind. Undichtigkeiten, beispielsweise dadurch, dass ein anliegender Schlauch den Zwickel nicht ausfüllen kann, sind somit verringerbar oder sogar vermeidbar. Eine umlaufende Rippe hat den Vorteil, einen Schlauch allseitig zu halten und axiale Sickerströme, die in Kehlen oder Fußbereichen der Rippen fließen könnten, zu vermeiden.

Gemäß einer vorteilhaften Ausgestaltung kann die wenigstens eine Rippe in mindestens einem Abschnitt schräg verlaufen in Bezug auf eine Umfangsrichtung des Schlauchnippels. Dadurch kann die Rippe Drehmomente aufnehmen und so eine Verdrehsicherung ausbilden.

Bei einer Ausgestaltung der Erfindung kann vorgesehen sein, dass die wenigstens eine Rippe an einem Grundkörper ausgebildet ist, wobei der Grundkörper eine zylindrische Form hat.

Bei einer Ausgestaltung der Erfindung kann vorgesehen sein, dass die wenigstens eine Rippe an einem Grundkörper ausgebildet ist, wobei der Grundkörper eine nicht-zylindrische Form hat. Beispielsweise kann die Form in einem Radialschnitt unrund, beispielsweise mehr- oder vielkantig oder oval sein. Beispielsweise kann die Form einen variierenden Umfang haben und beispielsweise - insbesondere in einem Axialschnitt - verjüngend, bauchig, bombiert, konvex oder konkav sein. Ein Beispiel für eine bauchige Form ist ein Doppelkegel, wobei die Kegel-Grundflächen aufeinander gelegt sind.

Bei einer Ausgestaltung der Erfindung kann vorgesehen sein, dass wenigstens eine weitere Rippe einen weiteren Rippenabschnitt aufweist, der in einem Winkel zu dem Rippenabschnitt der wenigstens einen Rippe ausgerichtet ist. Von Vorteil ist dabei, dass eine zusätzliche Sicherung gegen ein ungewolltes Verdrehen eines Schlauches auf der Anschlusskupplung schaffbar ist.

Hierbei kann beispielsweise ebenfalls vorgesehen sein, dass die wenigstens eine weitere Rippe umlaufend und/oder kreuzungsfrei verlaufend ausgebildet ist, beispielsweise mit den bereits beschriebenen Vorteilen.

Gemäß der Erfindung ist vorgesehen, dass die wenigstens eine Rippe um den Schlauchnippel umlaufend ausgebildet ist. Von Vorteil ist dabei, dass eine Zugentlastung entlang des gesamten Umfangs erreichbar ist. Insbesondere kann vorgesehen sein, dass die Rippe um den Schlauch geschlossen umlaufend ausgebildet ist. Somit ist eine ununterbrochene Rippe ausbildbar.

Bei einer Ausgestaltung der Erfindung kann vorgesehen sein, dass der erste Rippenabschnitt an den zweiten Rippenabschnitt angrenzt. Somit ist ein lückenfreier Übergang ausbildbar. Alternativ kann vorgesehen sein, dass zwischen dem ersten Rippenabschnitt und dem zweiten Rippenabschnitt ein Übergang ausgebildet ist, beispielsweise wenn die Rippenabschnitte gekrümmt ausgebildet sind.

Der erste Rippenabschnitt kann somit beispielsweise durch die Rippe mit dem zweiten Rippenabschnitt verbunden sein. Es kann auch vorgesehen sein, dass der erste Rippenabschnitt und der zweite Rippenabschnitt voneinander beabstandet ausgebildet sind.

Wie eingangs erwähnt sieht die Erfindung ferner vor, dass die Rippe wenigstens einen Halteabschnitt aufweist, der in der besagten Radialebene verläuft. Die Radialebene ist hierbei dadurch charakterisiert, dass sie senkrecht auf der Längsachse des Schlauchnippels steht. Von Vorteil ist dabei, dass ein derartiger Halteabschnitt eine besonders wirkungsvolle Aufnahme von Zugkräften erreichen kann. Insbesondere kann vorgesehen sein, dass der wenigstens eine Halteabschnitt an einem ersten Ende von dem ersten Rippenabschnitt und/oder an einem zweiten Ende vom dem zweiten Rippenabschnitt begrenzt ist. Somit ist im Anschluss an den Halteabschnitt beidseits eine Verdrehsicherung bereitstellbar. Der Halteabschnitt ist somit benachbart zum ersten Rippenabschnitt oder zum zweiten Rippenabschnitt ausbildbar. Es kann vorgesehen sein, dass der Halteabschnitt zwischen dem ersten Rippenabschnitt und dem zweiten Rippenabschnitt ausgebildet ist.

Wie erwähnt ist gemäß der Erfindung auch vorgesehen, dass die Rippenstruktur eine um den Schlauchnippel umlaufende weitere Rippe hat. Somit ist eine Zugentlastung, die durch die Rippe erreicht wird, verstärkbar. Hierbei kann die weitere Rippe beispielsweise in einem gleichbleibenden Abstand zu der Rippe verlaufen. Somit ist das Material eines aufgesteckten Schlauchs gleichmäßig belastbar. Es kann auch vorgesehen sein, dass die weitere Rippe gegenüber der Rippe um einen Drehwinkel versetzt verläuft. Somit sind Undichtigkeiten, die sich durch eine fluchtende Anordnung der Rippenabschnitte in Längsrichtung des Schlauchnippels ergeben können, vermeidbar. Beispielsweise kann auch die weitere Rippe geschlossen ausgebildet sein.

Insbesondere kann vorgesehen sein, dass die weitere Rippe einen ersten Rippenabschnitt und einen zweiten Rippenabschnitt aufweist, wobei sich der erste Rippenabschnitt an eine erste Verlaufsrichtung und sich der zweite Rippenabschnitt an eine zweite Verlaufsrichtung anschmiegt, und dass die erste Verlaufsrichtung in einem Winkel der zweiten Verlaufsrichtung ausgerichtet ist. Von Vorteil ist dabei, dass die Verdrehsicherung durch die zweite Rippe verstärkbar ist.

Bei einer Ausgestaltung der Erfindung kann vorgesehen sein, dass der Schlauchnippel eine Aufsteckhilfe aufweist, deren maximaler Außendurchmesser wenigstens gleich einem maximalen Außendurchmesser der Rippenstruktur ist. Somit ist ein Schlauch einfach über die Rippenstruktur aufsteckbar. Die Aufsteckhilfe kann hierbei an einem freien Ende des Schlauchnippels angeordnet sein, also beispielsweise in einem Bereich, der beim Aufstecken eines Schlauches zuerst mit dem Schlauch in Berührung kommt.

Bei einer Ausgestaltung der Erfindung kann vorgesehen sein, dass der Schlauchnippel eine Werkzeugtrennlinie aufweist, die eine Entformungsrichtung definiert, wobei die Rippe an jeder Stelle ihres Verlaufs in Bezug auf die Entformungsrichtung so ausgerichtet ist, dass keine Hinterschneidungen entstehen. Beispielsweise kann eine Werkzeugtrennlinie, die in einer Ebene liegt, eine Entformungsrichtung auszeichnen, die senkrecht auf dieser Ebene steht. Von Vorteil ist dabei, dass der Schlauchnippel in einem Spritzgussverfahren herstellbar ist, wobei die Zahl der benötigten Werkzeuge möglichst gering haltbar ist. Mit anderen Worten kann somit einfach erreicht werden, dass die angeformte Rippenstruktur die Entformung nicht stört. Dies kann beispielsweise dadurch erreichbar sein, dass bei denjenigen Rippenabschnitten, die aufgrund ihres Profils Hinterschneidungen in Bezug auf die Entformungsrichtung bilden, das Profil in Richtung der Entformungsrichtung deformiert wird, so dass die Hinterschneidung verschwindet.

Bei einer Ausgestaltung der Erfindung kann vorgesehen sein, dass der erste Rippenabschnitt in einem Winkel zu einer, beispielsweise der bereits erwähnten, Längsachse des Schlauchnippels ausgerichtet ist. Somit ist eine Längskerbung eines aufgeschobenen Schlauches vermeidbar. Gleiches kann auch für den zweiten Rippenabschnitt gelten.

Alternativ oder zusätzlich kann vorgesehen sein, dass der erste Rippenabschnitt in einem Winkel zu einer, beispielsweise der bereits erwähnten, Umfangsrichtung des Schlauchnippels ausgerichtet ist. Somit ist eine einfache Abweichung von einer Rotationssymmetrie ausbildbar, durch welche eine Verdrehsicherung schaffbar ist. Gleiches kann auch für den zweiten Rippenabschnitt gelten.

Besonders günstig ist, wenn der erste Rippenabschnitt und/oder der zweite Rippenabschnitt sowohl in einem Winkel zu der Längsachse des Schlauchnippels als auch in einem Winkel zu der Umfangsrichtung des Schlauchnippels ausgerichtet ist/sind. Auf diese Weise ergibt sich eine Formgestaltung der Rippe bzw. der weiteren Rippe, die einfach im Spritzgießverfahren herstellbar ist.

Bei einer Ausgestaltung der Erfindung kann vorgesehen sein, dass die wenigstens eine Rippe und/oder die weitere Rippe eine variierende Dicke und/oder Höhe aufweist/aufweisen. Durch derartige Abweichungen von einem gleichbleibenden Profil der Rippe(n) ist eine zusätzliche oder alternative Verdrehsicherung ausbildbar.

Bei einer Ausgestaltung der Erfindung kann vorgesehen sein, dass die wenigstens eine Rippe und/oder die weitere Rippe ein Rippenprofil aufweist/aufweisen, welches in seinem Fußbereich und/oder in seinem Kopfbereich abgerundet oder eckig ausgebildet ist. Es sind somit Rippenprofile bereitstellbar, die
- im Kopfbereich und im Fußbereich abgerundet,
- im Kopfbereich abgerundet und im Fußbereich eckig,
- im Kopfbereich eckig und im Fußbereich abgerundet oder
- im Kopfbereich und im Fußbereich eckig
ausgebildet sind.

Hierbei sind beispielsweise eckige Profilabschnitte im Kopfbereich günstig, weil dadurch Längskanten an der Rippe ausgebildet werden, die sich in das zu haltende Schlauchmaterial eingraben können.

Hierbei sind beispielsweise abgerundete Profilabschnitte im Fußbereich günstig, weil dadurch eine höhere Materialfestigkeit, insbesondere Bauteilfestigkeit, und somit eine längere Standzeit erreichbar sind.

Bei einer Ausgestaltung der Erfindung kann vorgesehen sein, dass die wenigstens eine Rippe und die weitere Rippe voneinander abweichende Rippenprofile aufweisen. Somit ist die Rippenstruktur individuell anpassbar. Ein abgerundeter Kopfbereich hat den Vorteil, dass der Schlauch geschont wird.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: eine erfindungsgemäße Anschlusskupplung mit einem aufgesteckten und vercrimpten Schlauchende,
- Fig. 2: die erfindungsgemäße Anschlusskupplung aus Figur 1 in einem Axialschnitt,
- Fig. 3: die erfindungsgemäße Anschlusskupplung gemäß Figur 2 in einer Seitenansicht,
- Fig. 4: die erfindungsgemäße Anschlusskupplung gemäß Figur 2 in einer gegenüber Figur 3 um 90° um die Längsachse des Schlauchnippels gedrehten Seitenansicht,
- Fig. 5: eine weitere erfindungsgemäße Anschlusskupplung in einer Seitenansicht,
- Fig. 6: eine zweite erfindungsgemäße Anschlusskupplung in einer Seitenansicht,
- Fig. 7: eine dritte erfindungsgemäße Anschlusskupplung in einer Seitenansicht,
- Fig. 8: eine vierte erfindungsgemäße Anschlusskupplung in einer Seitenansicht,
- Fig. 9: eine fünfte erfindungsgemäße Anschlusskupplung in einer Seitenansicht,
- Fig. 10: eine sechste erfindungsgemäße Anschlusskupplung in einer Seitenansicht,
- Fig. 11: eine nicht-erfindungsgemäße Anschlusskupplung in einer Seitenansicht,
- Fig. 12: eine weitere erfindungsgemäße Anschlusskupplung,
- Fig. 13: eine weitere erfindungsgemäße Anschlusskupplung in einer Seitenansicht,
- Fig. 14: eine weitere erfindungsgemäße Anschlusskupplung in einer Seitenansicht,
- Fig. 15: eine weitere erfindungsgemäße Anschlusskupplung in einer Seitenansicht,
- Fig. 16: eine nicht-erfindungsgemäße Anschlusskupplung in einer Ansicht von schräg oben,
- Fig. 17: die nicht-erfindungsgemäße Anschlusskupplung aus Figur 16 in einer um 90° um die Längsachse des Schlauchnippels gedrehten Ansicht,
- Fig. 18: die nicht-erfindungsgemäße Anschlusskupplung aus Figur 16 in einer Seitenansicht,
- Fig. 19: die nicht-erfindungsgemäße Anschlusskupplung aus Figur 16 in einer gegenüber Figur 18 um 90° um die Längsachse des Schlauchnippels gedrehten Seitenansicht,
- Fig. 20: die nicht-erfindungsgemäße Anschlusskupplung aus Figur 16 in einer Ansicht von schräg unten,
- Fig. 21: die nicht-erfindungsgemäße Anschlusskupplung aus Figur 16 in einer gegenüber Figur 20 um 90° um die Längsachse des Schlauchnippels gedrehten Ansicht,
- Fig. 22: einen Ausschnitt aus Figur 9 mit der Rippe,
- Fig. 23: eine weitere erfindungsgemäße Anschlusskupplung in einer Seitenansicht,
- Fig. 24: einen Ausschnitt aus Figur 23 analog zu Figur 9,
- Fig. 25: die abgewickelte Rippe aus Figur 24,
- Fig. 26: eine dreidimensionale Schrägansicht der erfindungsgemäßen Anschlusskupplung aus Figur 23,
- Fig. 27: eine weitere erfindungsgemäße Anschlusskupplung in einer dreidimensionalen Schrägansicht analog zu Figur 25,
- Fig. 28: ein abgerundetes Rippenprofil einer Rippe einer erfindungsgemäßen Anschlusskupplung,
- Fig. 29: ein eckiges Rippenprofil einer Rippe einer erfindungsgemäßen Anschlusskupplung,
- Fig. 30: ein Rippenprofil einer Rippe einer erfindungsgemäßen Anschlusskupplung mit eckigem Kopfbereich und abgerundetem Fußbereich,
- Fig. 31: eine nicht-erfindungsgemäße Anschlusskupplung in einer Ansicht von schräg oben,
- Fig. 32: die nicht-erfindungsgemäße Anschlusskupplung aus Figur 31 in einer um 90° um die Längsachse des Schlauchnippels gedrehten Ansicht,
- Fig. 33: die nicht-erfindungsgemäße Anschlusskupplung aus Figur 31 in einer Seitenansicht,
- Fig. 34: die nicht-erfindungsgemäße Anschlusskupplung aus Figur 31 in einer gegenüber Figur 33 um 90° um die Längsachse des Schlauchnippels gedrehten Seitenansicht,
- Fig. 35: die nicht-erfindungsgemäße Anschlusskupplung aus Figur 31 in einer gegenüber Figur 34 um 90° um die Längsachse des Schlauchnippels gedrehten Seitenansicht,
- Fig. 36: die nicht-erfindungsgemäße Anschlusskupplung aus Figur 31 in einer gegenüber Figur 35 um 90° um die Längsachse des Schlauchnippels gedrehten Seitenansicht,
- Fig. 37: die nicht-erfindungsgemäße Anschlusskupplung aus Figur 31 in einer Ansicht von schräg unten,
- Fig. 38: die nicht-erfindungsgemäße Anschlusskupplung aus Figur 37 in einer um 90° um die Längsachse des Schlauchnippels gedrehten Ansicht von schräg unten,
- Fig. 39: die nicht-erfindungsgemäße Anschlusskupplung aus Figur 31 in einer Aufsicht von oben,
- Fig. 40: die nicht-erfindungsgemäße Anschlusskupplung aus Figur 31 in einer Aufsicht von unten,
- Fig. 41: eine nicht-erfindungsgemäße Anschlusskupplung mit parallel ausgerichteten umlaufendenden Rippen in einer dreidimensionalen Schrägansicht,
- Fig. 42: die nicht-erfindungsgemäße Anschlusskupplung aus Fig. 41 in einer Seitenansicht,
- Fig. 43: die nicht-erfindungsgemäße Anschlusskupplung aus Fig. 41 in einer gegenüber Fig. 42 um 90° um die Längsachse gedrehten Seitenansicht,
- Fig. 44: eine weitere erfindungsgemäße Anschlusskupplung mit einem konischen Grundkörper,
- Fig. 45: eine Seitenansicht der erfindungsgemäßen Anschlusskupplung nach Fig. 44,
- Fig. 46: eine weitere erfindungsgemäße Anschlusskupplung mit zueinander und zu einer Längsachse schräg ausgerichteten, kreuzungsfrei umlaufenden Rippen, in einer dreidimensionalen Schrägansicht,
- Fig. 47: eine Seitenansicht der erfindungsgemäßen Anschlusskupplung nach Fig. 46,
- Fig. 48: eine Schnittansicht durch die erfindungsgemäße Anschlusskupplung nach Fig. 46 entlang der Schnittlinie in Fig. 47,
- Fig. 49: eine nicht-erfindungsgemäße Anschlusskupplung mit Rippen, die jeweils Augen ausbilden, in einer Schrägansicht von unten,
- Fig. 50: die nicht-erfindungsgemäße Anschlusskupplung nach Fig. 49 in einer Schrägansicht von oben und
- Fig. 51: die nicht-erfindungsgemäße Anschlusskupplung nach Fig. 49 in einer Seitenansicht.

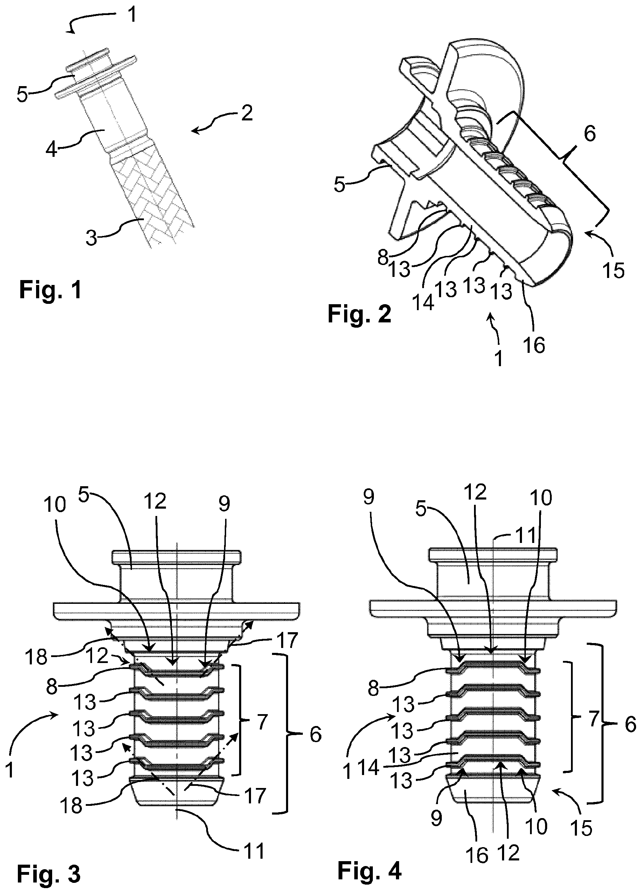

Figur 1 zeigt eine im Ganzen mit 1 bezeichnete erfindungsgemäße Anschlusskupplung, auf die ein Schlauchende 2 eines Schlauches 3 gesteckt ist. Das Schlauchende 2 ist in an sich bekannter Weise mit einer Crimphülse 4 vercrimpt.

Die Anschlusskupplung 1 weist ferner ein Anschlussstück 5 auf, mit der der Schlauch 3 an eine Armatur, einen weiteren Schlauch oder eine andere Anschlussstelle anschließbar ist.

Figur 2 zeigt die Anschlusskupplung 1 in entlang einer Axialebene aufgeschnittener Darstellung. Es ist ersichtlich, dass die Anschlusskupplung 1 einen Schlauchnippel 6 hat, der zum Gebrauch in das Schlauchende 2 eingesteckt wird. An einer Außenseite des Schlauchnippels 6 ist eine Rippenstruktur 7 (vgl. Fig. 3) ausgebildet. Die Rippenstruktur 7 dient zur Zugentlastung und weist wenigstens eine Rippe 8 auf.

Die Figuren 3 und 4 zeigen die Anschlusskupplung 1 aus zwei zueinander gedrehten Seitenansichten. Durch Zusammenschau der Figuren 3 und 4 ist ersichtlich, dass die Rippe 8 geschlossen umlaufend ausgebildet ist und in ihrem Verlauf wenigstens eine Richtungsänderung aufweist, die aus einer Umfangsrichtung herausführt.

Die Rippe 8 weist einen ersten Rippenabschnitt 9 und einen zweiten Rippenabschnitt 10 auf. Die Rippenabschnitte 9 und 10 sind jeweils schräg zu einer Längsachse 11 des Schlauchnippels 6 und schräg zu einer Radialebene, die senkrecht auf der Längsachse 11 steht, also auch schräg zu einer Umfangsrichtung, die in der Radialebene liegt, ausgerichtet. Die Begriffe Umfang, Tangente und Radius können in dieser Beschreibung auf die Längsachse 11 bezogen sein.

Hierbei folgen die Rippenabschnitte 9 und 10 jeweils einer Verlaufsrichtung 17, 18, die durch eine Tangente entlang des Verlaufs definiert ist. Die Verlaufsrichtung 17 des ersten Rippenabschnitts 9 ist hierbei nicht parallel zu der Verlaufsrichtung 18 des zweiten Rippenabschnitts 10 ausgerichtet. Vielmehr ist im Ausführungsbeispiel vorgesehen, dass sich die Verlaufsrichtungen in einem Punkt schneiden. Bei weiteren Ausführungsbeispielen ist vorgesehen, dass sich die Verlaufsrichtungen nicht schneiden, sondern dass sie windschief zueinander angeordnet sind. Durch die Änderung der Verlaufsrichtungen 17, 18 wird eine Richtungsänderung der Rippe 8 erreicht, die zwischen dem ersten Rippenabschnitt 9 und dem zweiten Rippenabschnitt 10 erfolgt.

Durch die Anordnung der Rippenabschnitte 9 und 10 wird erreicht, dass ein aufgestecktes Schlauchende 2 nicht in Umfangsrichtung entlang der Rippe 8 durchrutschen kann, so dass eine Verdrehsicherung erreicht ist.

Zwischen dem ersten Rippenabschnitt 9 und dem zweiten Rippenabschnitt 10 sind Halteabschnitte 12 ausgebildet. Im Ausführungsbeispiel sind die Halteabschnitte 12 ungefähr längs einer Radialebene, also in Umfangsrichtung, geführt. Die Halteabschnitte 12 bewirken jeweils eine Zugentlastung. An den beiden Enden jedes der Halteabschnitte 12 ist jeweils ein Rippenabschnitt 9, 10 angeordnet, der den Halteabschnitt 12 begrenzt. Es kann auch gesagt werden, dass jeder Halteabschnitt 12 einen zweiten Rippenabschnitt 10 im Sinne dieser Beschreibung darstellt, da die Verlaufsrichtung 17 des ersten Rippenabschnitts 9 in einem Winkel zur Umfangsrichtung verläuft. Zwischen dem ersten Rippenabschnitt 9 und dem Halteabschnitt 12 bzw. zwischen dem Halteabschnitt 12 und den zweiten Rippenabschnitt 10 vollzieht die Rippe 8 jeweils eine Richtungsänderung.

Die Rippenstruktur weist zusätzlich zu der Rippe 8 weitere Rippen 13 auf. Die weiteren Rippen 13 - im Ausführungsbeispiel sind dies vier weitere Rippen 13 - sind im Beispiel grundsätzlich gleichartig zu der Rippe 8 ausgebildet.

Im Ausführungsbeispiel ist gezeigt, dass die weiteren Rippen 13 jeweils in einem gleichbleibenden Abstand zu der Rippe 8 geführt sind.

Im Ausführungsbeispiel ist die Anschlusskupplung 1 im Spritzgießverfahren aus Kunststoff hergestellt. Hierbei ist die Darstellung in Figur 4 so gewählt, dass eine Werkzeugtrennlinie in der Zeichenebene liegt und um die gesamte Kontur der Anschlusskupplung 1 umläuft.

Die Rippe 8 und die weiteren Rippen 13 sind so ausgerichtet, dass das zweiteilige Spritzgusswerkzeug in einer Richtung, die in Figur 4 senkrecht auf der Zeichenebene steht, zum Entformen auseinandergefahren werden kann, ohne mit der Rippenstruktur zu kollidieren. Dies wird dadurch erreicht, dass die Rippe 8 und die weiteren Rippen 13 jeweils an jeder Stelle ihres Verlaufs mit einer Tangentialrichtung an ihrer Seitenfläche tangential oder zumindest so, dass keine Hinterschneidungen entstehen, die ein Entformen behindern könnten, zu der Entformungsrichtung ausgerichtet sind.

In Figur 3 ist ersichtlich, dass die Rippe 8 im Rippenabschnitt 9 und im Rippenabschnitt 10 nicht in Radialrichtung von dem vorzugsweise zylindrischen Grundkörper 14 des Schlauchnippels 6 abstehen, sondern gegenüber der Radialrichtung derart geneigt sind, dass sich die beschriebene Entformbarkeit ergibt.

An dem Schlauchnippel 6 ist am freien Ende 15 eine Aufsteckhilfe 16 ausgebildet. Die Aufsteckhilfe 16 ist zu einem Ende verjüngend ausgebildet, beispielsweise konisch.

Um das Schlauchende 2 über die Rippenstruktur 7 zu schieben, ist der Außendurchmesser der Aufsteckhilfe 16 an seiner dicksten Stelle, also der maximale Außendurchmesser der Aufsteckhilfe 16, zumindest gleich wie oder sogar größer als der maximale Außendurchmesser der Rippenstruktur 7 gewählt.

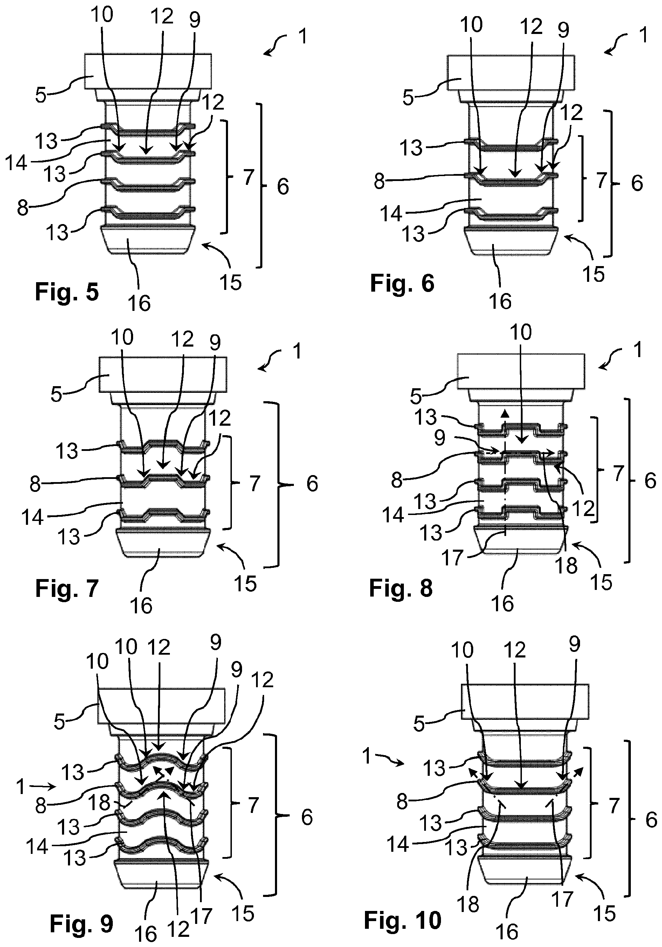

Die Figuren 5 bis 10 und 12-15 zeigen weitere Ausführungsbeispiele der Erfindung. Konstruktive und funktionale Einzelheiten und Bestandteile, die gleichartig oder identisch zu Einzelheiten und Bestandteilen des vorangegangenen Ausführungsbeispiels sind, sind mit denselben Bezugszeichen bezeichnet und nicht noch einmal gesondert beschrieben. Die Ausführungen zu den Figuren 1 bis 4 gelten daher zu den Figuren 5 bis 10 und 12-15 entsprechend.

Das Ausführungsbeispiel gemäß Figur 5 unterscheidet sich von dem Ausführungsbeispiel gemäß den Figuren 1 bis 4 dadurch, dass nur drei weitere Rippen 13 vorhanden sind.

Bei dem Ausführungsbeispiel gemäß Figur 6 sind dagegen nur zwei weitere Rippen 13 ausgebildet.

Bei weiteren Ausführungsbeispielen sind andere Anzahlen von weiteren Rippen 13 ausgebildet, beispielsweise mehr als vier oder weniger als zwei.

Das Ausführungsbeispiel gemäß Figur 7 unterscheidet sich von den vorangehenden Ausführungsbeispielen dadurch, dass die Halteabschnitte 12 jeweils kürzer ausgebildet sind. Hierdurch weist die Rippe 8 insgesamt acht Halteabschnitte 12 mit dazwischenliegenden Rippenabschnitten 9, 10 auf.

Das Ausführungsbeispiel gemäß Figur 8 unterscheidet sich von den vorangegangenen Ausführungsbeispielen dadurch, dass der erste Rippenabschnitt 9 steiler angestellt sind und parallel zu der Längsachse 11 verläuft, während der zweite Rippenabschnitt 10 in Umfangsrichtung ausgerichtet ist und in einer Radialebene verläuft. Hierdurch wird erreicht, dass der zweite Rippenabschnitt 10 auch als Halteabschnitt wirkt. Der Winkel zwischen der Verlaufsrichtung 17 des ersten Rippenabschnitts 9 und der Verlaufsrichtung 18 des zweiten Rippenabschnitts 10 beträgt im Beispiel 90°.

Die Ausführungsbeispiele gemäß den Figuren 9 und 10 unterscheiden sich von den vorangehenden Ausführungsbeispielen dadurch, dass die Rippenabschnitte 9, 10 nicht geradlinig, sondern gekrümmt ausgebildet sind.

Betrachtet man eine Tangente an einem beliebigen Punkt in jedem der Rippenabschnitt 9, 10, so ist eine Verlaufsrichtung 17, 18 der Rippe 8 an diesem Punkt gegeben, die in einem Winkel zu einer entsprechenden Verlaufsrichtung 17, 18 in dem jeweils anderen Rippenabschnitt 9, 10 verläuft.

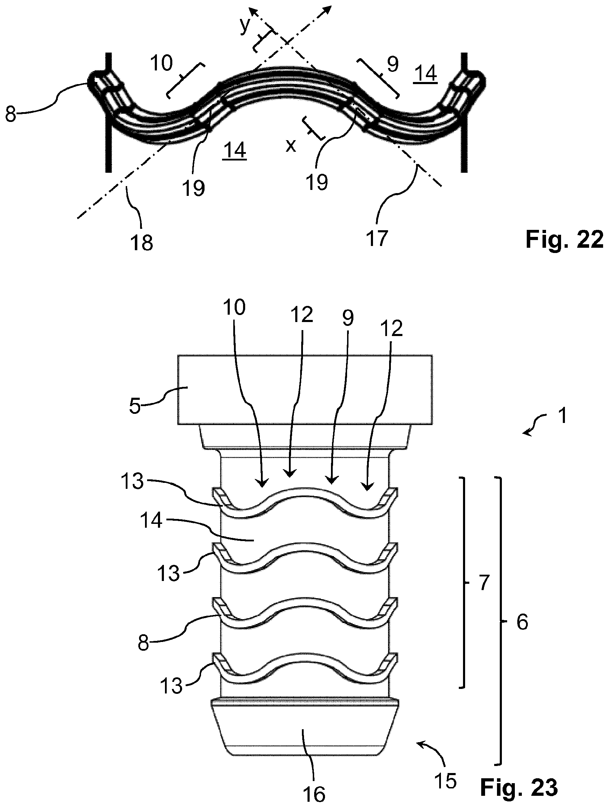

Das infinitesimale Folgen der Verlaufsrichtung 17, 18 durch die Rippe 8 im jeweiligen Rippenabschnitt 9, 10 ist in Figur 22 in einer Vergrößerung aus Figur 9 dargestellt. Es ist ersichtlich, dass sich die Rippe 8 an die Verlaufsrichtungen 17, 18 nur anschmiegt, wie dies eine Tangente tut. Jenseits des Fußpunkts 19 dieser Tangente, also jenseits des Punktes, an dem die Verlaufsrichtungen 17, 18 jeweils die Rippe 8 schneiden, steigt die Abweichung y mehr als linear mit der Entfernung x von dem Fußpunkt an. Der Bereich, in dem im Sinne dieser Erfindung noch davon gesprochen werden kann, dass die Rippe 8 den jeweiligen Verlaufsrichtungen 17, 18 folgt, ist in Figur 22 mit den Bezugszeichen 9 bzw. 10 angedeutet.

Bei dem Ausführungsbeispiel gemäß Figur 9 ist zusätzlich jeder Halteabschnitt 12 gekrümmt ausgebildet. Im Mittel ist der Halteabschnitt 12 weiterhin in etwa entlang einer Radialebene oder in Umfangsrichtung ausgerichtet.

Bei dem Ausführungsbeispiel gemäß Figur 10 sind die Halteabschnitte 12 dagegen im Wesentlichen gerade ausgeführt.

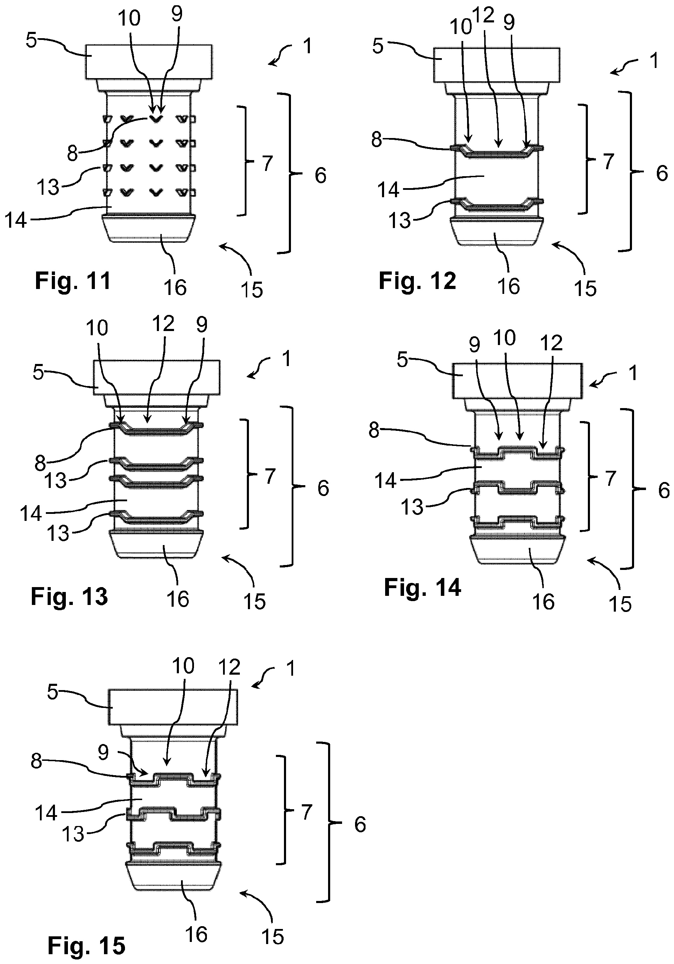

Bei dem nicht-erfindungsgemäßen Ausführungsbeispiel gemäß Figur 11 weist die Rippenstruktur 7 keine umlaufenden Rippen auf, sondern die Rippen 8 und die weiteren Rippen 13 erstrecken sich jeweils nur über einen Umfangsabschnitt. Die Rippen 8 (und die weiteren Rippen 13) sind hierbei jeweils aus zwei Rippenabschnitten 9 und 10 zusammengesetzt, ohne dass dazwischen ein Halteabschnitt 12 ausgebildet wäre. Jede Rippe 8 ist hierbei auf einen engen Umfangsabschnitt begrenzt.

Bei dem erfindungsgemäßen Ausführungsbeispiel gemäß Figur 12 ist nur eine weitere Rippe 13 zusätzlich zu der Rippe 8 ausgebildet.

Bei dem erfindungsgemäßen Ausführungsbeispiel gemäß Figur 13 sind die weiteren Rippen 13 untereinander und zu der Rippe 8 nicht in einem gleichmäßigen Abstand angeordnet.

Bei weiteren Ausführungsbeispielen sind die weiteren Rippen 13 nicht im gleichbleibenden Abstand zu der Rippe 8 geführt, sondern einzelne oder alle der weiteren Rippen 13 sind zwar geometrisch gleich ausgebildet, jedoch um eine Drehung um die Längsachse 11 gegenüber der Rippe 8 versetzt ausgerichtet. Auf diese Weise lässt sich beispielsweise einfach erreichen, dass die Rippenabschnitte 9, 10 nicht längs der Längsachse 11 fluchtend angeordnet sind.

Die Figuren 14 und 15 zeigen erfindungsgemäße Anordnungen, in denen die weiteren Rippen 13 jeweils gegenüber der Rippe 8 um einen Winkelbetrag versetzt angeordnet sind. Dieser Winkelbetrag kann beispielsweise 90°, 45° oder 22,5° oder ein anderer Betrag sein.

Bei weiteren Ausführungsbeispielen sind andere Anzahlen von Rippen 8, 13 und andere Abstände zwischen den einzelnen Rippen 8, 13 der Rippenstruktur 7 realisiert. Bei weiteren Ausführungsbeispielen sind auch Mischformen, in denen einzelne Rippen oder Rippenformen der bisher beschriebenen Ausführungsbeispiele untereinander kombiniert sind, realisiert.

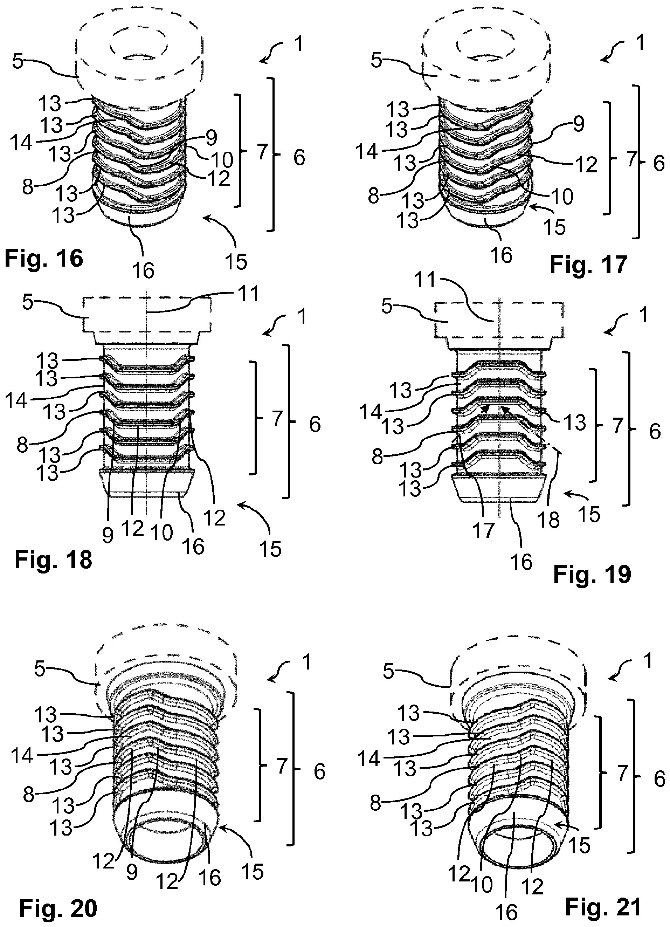

Bei dem nicht-erfindungsgemäßen Ausführungsbeispiel gemäß den Figuren 16 bis 21 ist das Anschlussstück 5 durch gestrichelte Linien angedeutet. Das Anschlussstück 5 kann beliebig ausgebildet sein, je nach Bedürfnissen der Anschlussstelle. Dies gilt auch für die übrigen Ausführungsbeispiele.

Aus den Figuren 16 bis 21 ist ersichtlich, dass die Rippenabschnitte 9, 10 mit ihren Seitenflächen 23 nicht radial ausgerichtet sind, um die beschriebene Entformbarkeit zu gewährleisten. Hierzu sind die Rippen 8, 10 an jeder Stelle ihres Verlaufs so gegenüber dem Grundkörper 14 geneigt, dass sie in der Darstellung nach Figur 20 mit der Blickrichtung fluchten. In Figur 19 sind dagegen Seitenflächen 23 der Rippenabschnitte 9, 10 zu sehen, die durch diese Ausrichtung sichtbar werden.

Allgemein kann gesagt werden, dass die Ausrichtung der Blickrichtung in den Figuren 3, 5, 6, 10, 12, 13 und 18 analog zu der Figur 3 gewählt ist, also dass die Blickrichtung quer zur Entformungsrichtung ausgerichtet ist. Bei den Figuren 4 und 19 stimmt die Entformungsrichtung dagegen mit der Blickrichtung überein.

Bei dem Ausführungsbeispiel gemäß Figur 11 ist ersichtlich, dass die beschriebene Entformbarkeit nicht gewährleistet ist. Anhand der übrigen Ausführungsbeispiele ist jedoch klar, wie die V-förmigen Rippen 8, 13 zu verändern wären, um eine Entformbarkeit zu erreichen.

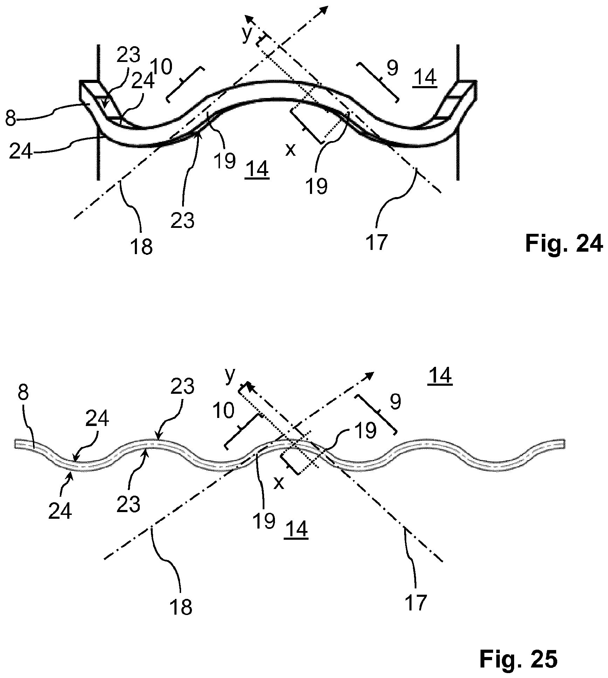

Die Figuren 23 bis 26 zeigen ein weiteres erfindungsgemäßes Ausführungsbeispiel. Konstruktive und funktionale Einzelheiten und Bestandteile, die gleichartig oder identisch zu Einzelheiten und Bestandteilen des vorangegangenen Ausführungsbeispiels sind, sind mit denselben Bezugszeichen bezeichnet und nicht noch einmal gesondert beschrieben. Die Ausführungen zu den Figuren 1 bis 22 gelten daher zu den Figuren 23 bis 26 entsprechend. Hierbei zeigt Figur 25 die Rippe 8 aus Figur 24 abgewickelt von dem zylindrischen Grundkörper 14 und in eine Ebene gelegt.

Das Ausführungsbeispiel gemäß den Figuren 23 bis 26 unterscheidet von den vorangegangenen Ausführungsbeispielen dadurch, dass das Rippenprofil 20 nicht abgerundet, sondern rechteckig ausgebildet ist.

Es ist ersichtlich, dass sich die Rippen 8, 13 jeweils in Rippenabschnitten 9, 10 an eine Verlaufsrichtung 17, 18 anschmiegen, wie dies zu Figur 22 ausführlich beschrieben wurde.

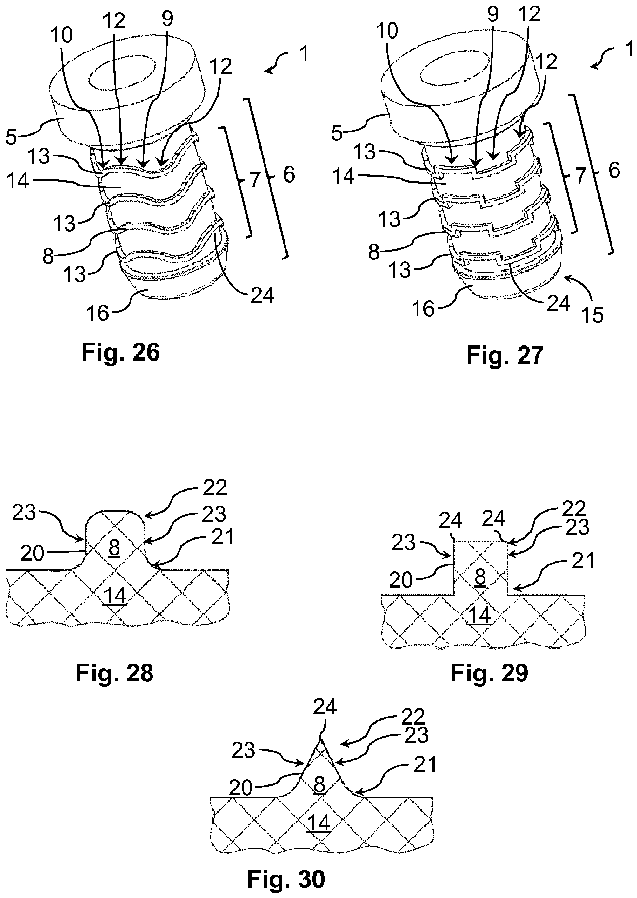

Figur 27 zeigt ein weiteres erfindungsgemäßes Ausführungsbeispiel. Konstruktive und funktionale Einzelheiten und Bestandteile, die gleichartig oder identisch zu Einzelheiten und Bestandteilen des vorangegangenen Ausführungsbeispiels sind, sind mit denselben Bezugszeichen bezeichnet und nicht noch einmal gesondert beschrieben. Die Ausführungen zu den Figuren 1 bis 26 gelten daher zu der Figur 27 entsprechend.

Es ist ersichtlich, dass der Verlauf der Rippen 8, 13 denjenigen der Figur 8 ähnelt. Allerdings ist hier das Rippenprofil 20 wieder rechteckig und nicht abgerundet.

Figur 28 zeigt ein Rippenprofil 20, also einen Querschnitt durch die Rippe 8, 13 quer zur Verlaufsrichtung 17, 18, wie es beispielsweise in den Figuren 1 bis 22 vorhanden ist. Das Rippenprofil 20 hat einen Fußbereich 21 und einen Kopfbereich 22, zwischen denen die Seitenflächen 23 des Rippenprofils 20 ausgebildet sind.

Es ist ersichtlich, dass das Rippenprofil 20 im Kopfbereich 22 und im Fußbereich 21 durch Übergänge gerundet ausgebildet ist.

Demgegenüber ist das Rippenprofil 20 bei Figur 29 im Kopfbereich 22 und im Fußbereich 21 eckig ausgeführt. Die Rippe 8, 13, beispielsweise die Rippen 8, 13 in den Figuren 23 bis 26, weisen daher Längskanten 24 auf.

Figur 30 zeigt ein im Wesentlichen dreieckiges Rippenprofil 20. Dieses ist im Fußbereich 21 abgerundet und im Kopfbereich 22 eckig ausgebildet. Es ergibt sich somit eine einzige Längskante 24.

Bei weiteren Ausführungsbeispielen ist das Rippenprofil im Kopfbereich abgerundet und im Fußbereich eckig ausgebildet, bei anderen Ausführungsbeispielen ist das Rippenprofil im Fußbereich abgerundet und Kopfbereich im eckig ausgebildet.

Bei weiteren Ausführungsbeispielen ist im Fußbereich 21 der Rippen 8, 13, 26 ein Freistich ausgebildet. Somit sind Kerbspannungen reduzierbar.

Bei den gezeigten Ausführungsbeispielen weisen alle Rippen 8 und weiteren Rippen 13 einer Anschlusskupplung 1 jeweils übereinstimmenden Rippenprofile 20 auf.

Bei weiteren Ausführungsbeispielen weisen die Rippe und zumindest eine der weiteren Rippen voneinander abweichende Rippenprofile auf. Dies kann beispielsweise mit einer eckigen oder runden Ausgestaltung des Rippenprofils im Fußbereich und/oder im Kopfbereich einhergehen.

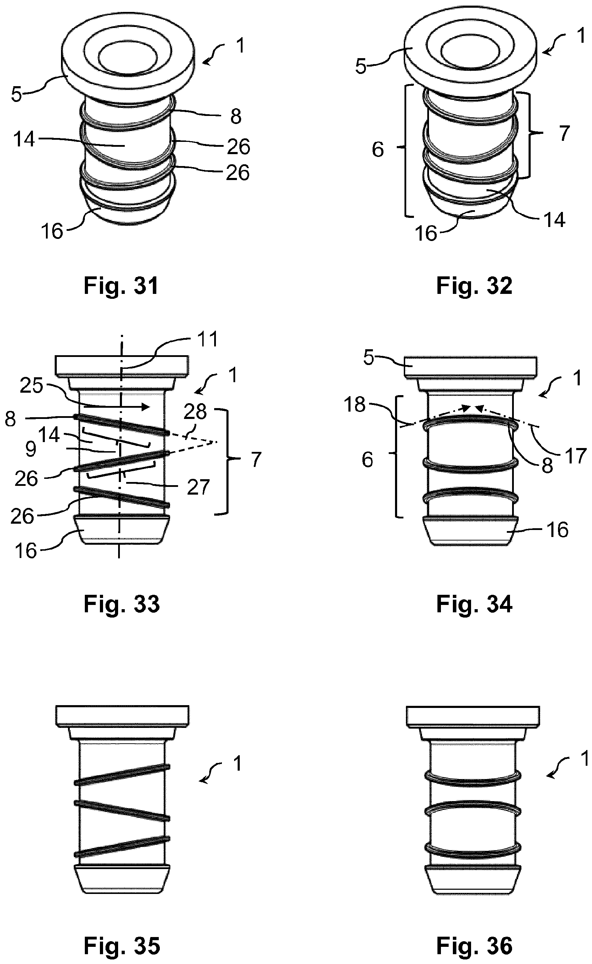

Die Figuren 31 bis 40 zeigen verschiedene Ansichten einer nicht-erfindungsgemäßen Anschlusskupplung 1. Bei dieser sind mehrere Rippen ausgestaltet, die jeweils als um den Grundkörper 14 umlaufende Ellipsen ausgebildet sind. Jede der drei in Figur 31 oder etwa Figur 33 zu erkennenden Rippen 8, 26 ist dabei schief gelegen in Bezug auf eine Umfangsrichtung 25 des Schlauchnippels 6, welche in Figur 33 mit Hilfe eines Pfeils illustriert ist. Jede der Rippen 8, 26 läuft in sich geschlossen um den Grundkörper 14 herum. Die Rippen 8, 26 sind voneinander beabstandet angeordnet und kreuzen sich nicht.

Die Ellipsenform ergibt sich hier aus der Tatsache, dass der Grundkörper 14 eine zylindrische Außenkontur hat und die Rippen 8, 26 jeweils in einer Ebene und schräg verlaufen in Bezug auf die besagte Umfangsrichtung 25, die - wie in Figur 33 zu erkennen ist - senkrecht zur Längsachse 11 der Anschlusskupplung 1 verläuft.

Ferner ist in Figur 34 illustriert, dass auch bei dieser Ausgestaltung einzelne Rippen 8, 26 entlang ihres jeweiligen Verlaufs eine Richtungsänderung erfahren. Denn wie die gestrichelten Pfeile zeigen, weisen einzelne Rippen 8, 26 Abschnitte auf, die sich an unterschiedliche Verlaufsrichtungen 17, 18 anschmiegen. Diese Richtungen 17, 18 treffen sich in Figur 34 gerade in einem Punkt, unterhalb dessen die oberste der drei dargestellten Rippen eine Richtungsänderung erfährt: links von dem Punkt der Richtungsänderung steigt die Rippe 8 von links nach rechts an, während sie danach wieder abfällt, sich also in Richtung der Aufsteckhilfe 16 bewegt.

Schließlich ist anhand der Figuren 33 und 35 gut zu erkennen, dass die beiden unteren Rippen 26 gegeneinander verkippt und nicht etwa parallel angeordnet sind. Alternativ kann gesagt werden, dass die Rippen 8, 26 zwar gleichartig ausgebildet, jedoch um eine Längsachse 11 gegeneinander verdreht angeordnet sind.

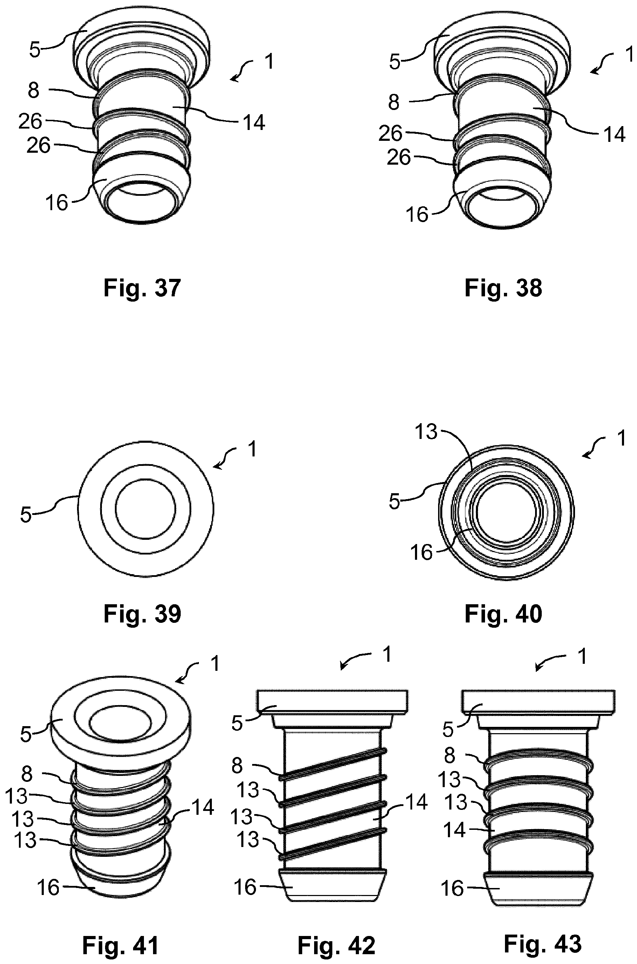

Die Figuren 41 bis 43 zeigen ein nicht-erfindungsgemäßes Ausführungsbeispiel. Konstruktive und funktionale Einzelheiten und Bestandteile, die gleichartig oder identisch zu Einzelheiten und Bestandteilen des vorangegangenen Ausführungsbeispiels sind, sind mit denselben Bezugszeichen bezeichnet und nicht noch einmal gesondert beschrieben. Die Ausführungen zu den Figuren 1 bis 40 gelten daher zu den Figuren 41 bis 43 entsprechend.

Das nicht-erfindungsgemäße Ausführungsbeispiel nach den Figuren 41 bis 43 unterscheidet sich von dem Ausführungsbeispiel nach den Figuren 31 bis 40 zumindest dadurch, dass die weiteren Rippen 13 nicht schräg oder in einem Winkel 28 zu den jeweils benachbarten Rippen 8, 13, sondern parallel zu der Rippe 8 ausgerichtet sind. Jede Rippe 8, 13 beschreibt demnach eine Ebene, in der die Rippe 8, 13 liegt, und diese Ebenen liegen parallel zueinander.

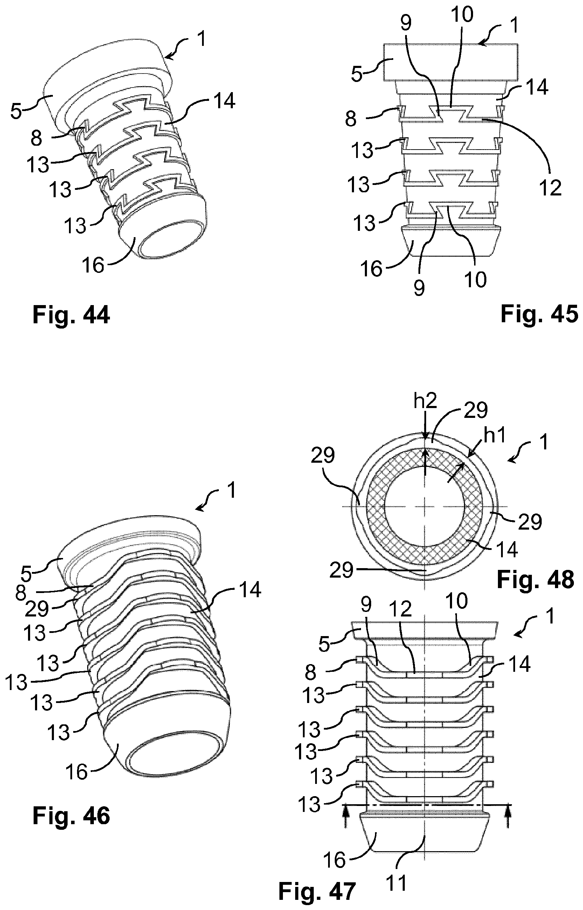

Die Figuren 44 und 45 zeigen ein weiteres erfindungsgemäßes Ausführungsbeispiel. Konstruktive und funktionale Einzelheiten und Bestandteile, die gleichartig oder identisch zu Einzelheiten und Bestandteilen des vorangegangenen Ausführungsbeispiels sind, sind mit denselben Bezugszeichen bezeichnet und nicht noch einmal gesondert beschrieben. Die Ausführungen zu den Figuren 1 bis 43 gelten daher zu den Figuren 44 und 45 entsprechend. Dieses Ausführungsbeispiel unterscheidet sich von den vorangehenden Ausführungsbeispielen zumindest dadurch, dass der Grundkörper 14 nicht zylindrisch, sondern konisch ausgebildet ist.

Bei weiteren Ausführungsbeispielen können auch andere verjüngende Profile, beispielsweise ein trompetenförmiger Grundkörper, ausgebildet sein.

Diese Grundkörper können auch bei den vorangegangenen und/oder nachfolgenden Ausführungsbeispielen ausgebildet sein.

Das Ausführungsbeispiel nach den Figuren 44 und 45 unterscheidet sich von den übrigen Ausführungsbeispielen außerdem dadurch, dass die Richtungsänderung in den Rippen 8, 13 jeweils deutlich mehr als 90° beträgt, beispielsweise zwischen 130° und 140° liegt.

Die Figuren 46 bis 48 zeigen ein weiteres erfindungsgemäßes Ausführungsbeispiel. Konstruktive und funktionale Einzelheiten und Bestandteile, die gleichartig oder identisch zu Einzelheiten und Bestandteilen des vorangegangenen Ausführungsbeispiels sind, sind mit denselben Bezugszeichen bezeichnet und nicht noch einmal gesondert beschrieben. Die Ausführungen zu den Figuren 1 bis 45 gelten daher zu den Figuren 46 bis 48 entsprechend. Dieses Ausführungsbeispiel unterscheidet sich von den vorangehenden Ausführungsbeispielen zumindest dadurch, dass eine Höhe h1, h2 (vgl. Fig. 48) der Rippen 8, 13 entlang des Verlaufs dieser Rippen 8, 13 variiert. Es sind somit Rippenabschnitte mit kleinerer Höhe h1 und solche mit größerer Höhe h2 ausgebildet. Hierdurch sind zungenförmige Anformungen 29 ausgebildet. Dies bewirkt bereits eine Verdrehsicherung und verstärkt eine axiale Haltekraft.

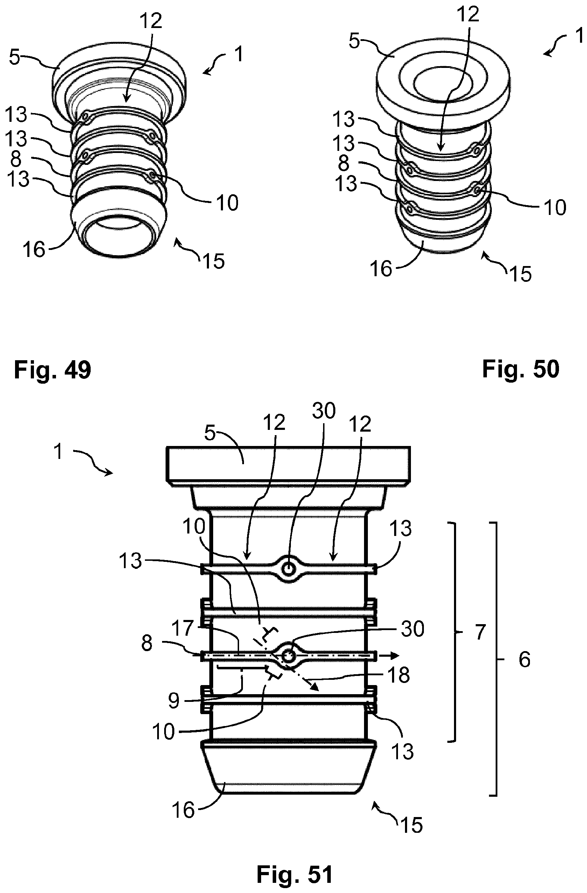

Die Figuren 49 bis 51 zeigen hingegen ein nicht-erfindungsgemäßes Ausführungsbeispiel. Konstruktive und funktionale Einzelheiten und Bestandteile, die gleichartig oder identisch zu Einzelheiten und Bestandteilen des vorangegangenen Ausführungsbeispiels sind, sind mit denselben Bezugszeichen bezeichnet und nicht noch einmal gesondert beschrieben. Die Ausführungen zu den Figuren 1 bis 48 gelten daher zu den Figuren 49 bis 51 entsprechend.

Das Ausführungsbeispiel gemäß den Figuren 49 bis 51 unterscheidet sich von den vorangehenden Ausführungsbeispielen dadurch, dass sich jede Rippe 8, 13 an mehreren Stellen aufspaltet und wieder vereinigt, um ein Auge 30 zu bilden. Durch diese Aufspaltung sind jeweils zwei zweite Rippenabschnitte 10 gebildet, deren Verlaufsrichtungen 18 (in Figur 51 nur für einen Rippenabschnitt 10 eingezeichnet) mit der Verlaufsrichtung 17 des angrenzenden ersten Rippenabschnitts 9 einen Winkel einschließen.

### Bezugszeichenliste

- 1: Anschlusskupplung
- 2: Schlauchende
- 3: Schlauch
- 4: Crimphülse
- 5: Anschlussstück
- 6: Schlauchnippel
- 7: Rippenstruktur
- 8: Rippe
- 9: (erster) Rippenabschnitt
- 10: (zweiter) Rippenabschnitt
- 11: Längsachse
- 12: Halteabschnitte
- 13: weitere Rippe
- 14: Grundkörper
- 15: freies Ende
- 16: Aufsteckhilfe
- 17: (erste) Verlaufsrichtung
- 18: (zweite) Verlaufsrichtung
- 19: Fußpunkt
- 20: Rippenprofil
- 21: Fußbereich
- 22: Kopfbereich
- 23: Seitenfläche
- 24: Längskante
- 25: Umfangsrichtung
- 26: weitere Rippe
- 27: weiterer Rippenabschnitt
- 28: Winkel
- 29: Anformung
- 30: Auge
- h1: (kleinere) Höhe
- h2: (größere) Höhe

## Patentansprüche

1. **Anschlusskupplung (1)** für einen Schlauch (3), mit
- einem Schlauchnippel (6), an welchem eine Rippenstruktur (7) mit wenigstens einer Rippe (8) ausgebildet ist,
- wobei die wenigstens eine Rippe (8) in ihrem Verlauf wenigstens eine Richtungsänderung zur Verdrehsicherung aufweist,
- wobei die wenigstens eine Rippe (8) wenigstens einen Halteabschnitt (12) zur Aufnahme von Zugkräften aufweist, der in einer Radialebene verläuft, die senkrecht auf einer Längsachse (11) des Schlauchnippels (6) steht,
- wobei die wenigstens eine Rippe (8) um den Schlauchnippel (6) umlaufend ausgebildet ist,
- wobei die Rippenstruktur (7) eine um den Schlauchnippel (6) umlaufende weitere Rippe (13) hat, die in ihrem Verlauf wenigstens eine Richtungsänderung aufweist,
- **dadurch gekennzeichnet, dass** die beiden Rippen (7, 13) zueinander vollständig beabstandet angeordnet sind, sodass ein in der Radialebene umlaufender Bereich zwischen den beiden Rippen (8, 13) an dem Schlauchnippel (6) rippenfrei ausgestaltet ist.

2. Anschlusskupplung (1) nach Anspruch 1, wobei die wenigstens eine Rippe (8) einen ersten Rippenabschnitt (9) und einen zweiten Rippenabschnitt (10) aufweist, wobei sich der erste Rippenabschnitt (9) an eine erste Verlaufsrichtung (17) und wobei sich der zweite Rippenabschnitt (10) an eine zweite Verlaufsrichtung (18) anschmiegt, und wobei die erste Verlaufsrichtung (17) in einem Winkel zu der zweiten Verlaufsrichtung (18) ausgerichtet ist.

3. Anschlusskupplung (1) nach Anspruch 1 oder 2, wobei die wenigstens eine Rippe (8) als kreuzungsfrei umlaufende Rippe (8) ausgebildet ist und in mindestens einem Rippenabschnitt (9, 10) schräg verläuft in Bezug auf eine Umfangsrichtung des Schlauchnippels (6).

4. Anschlusskupplung (1) nach einem der vorangehenden Ansprüche, wobei die wenigstens eine Rippe (8) an einem Grundkörper (14) ausgebildet ist, der eine zylindrische oder nicht- zylindrisch, insbesondere unrunde, verjüngende, konvexe oder konkave Form hat.

5. Anschlusskupplung (1) nach Anspruch 2, wobei die wenigstens eine weitere umlaufende Rippe (26) einen weiteren Rippenabschnitt (27) aufweist, der in einem Winkel (28) zu dem ersten beziehungsweise zweiten (9, 10) der wenigstens einen Rippe (8) ausgerichtet ist.

6. Anschlusskupplung (1) nach einem der vorangehenden Ansprüche, wobei die wenigstens eine Rippe (8) um den Schlauchnippel (6), geschlossen und/oder kreuzungsfrei umlaufend ausgebildet ist.

7. Anschlusskupplung (1) nach Anspruch 2, wobei der erste Rippenabschnitt (9) an den zweiten Rippenabschnitt (10) angrenzt.

8. Anschlusskupplung (1) nach Anspruch 2, wobei der wenigstens eine Halteabschnitt (12) an einem ersten Ende von dem ersten Rippenabschnitt (9) und/oder an einem zweiten Ende vom dem zweiten Rippenabschnitt (10) begrenzt ist.

9. Anschlusskupplung (1) nach einem der vorangehenden Ansprüche, **dadurch gekennzeichnet, dass** die um den Schlauchnippel (6) umlaufende, weitere Rippe (13) in einem gleichbleibenden Abstand zu der wenigstens einen Rippe (8) oder gegenüber der wenigstens einen Rippe (8) um einen Drehwinkel versetzt verläuft, insbesondere wobei die weitere Rippe (13) einen ersten Rippenabschnitt (9) und einen zweiten Rippenabschnitt (10) aufweist, wobei sich der erste Rippenabschnitt (9) an eine erste Verlaufsrichtung (17) und sich der zweite Rippenabschnitt (10) an eine zweite Verlaufsrichtung (18) anschmiegt, und wobei die erste Verlaufsrichtung (17) in einem Winkel zu der zweiten Verlaufsrichtung (18) ausgerichtet ist.

10. Anschlusskupplung (1) nach einem der vorangehenden Ansprüche, wobei der Schlauchnippel (6) eine Aufsteckhilfe (16) aufweist, deren maximaler Außendurchmesser wenigstens gleich einem maximalen Außendurchmesser der Rippenstruktur (7) ist.

11. Anschlusskupplung (1) nach einem der vorangehenden Ansprüche, wobei der Schlauchnippel (6) eine Werkzeugtrennlinie aufweist, die eine Entformungsrichtung definiert, wobei die wenigstens eine Rippe (8) an jeder Stelle ihres Verlaufs in Bezug auf die Entformungsrichtung so ausgerichtet ist, dass keine Hinterschneidungen entstehen.

12. Anschlusskupplung (1) nach Anspruch 2, wobei der erste Rippenabschnitt (9) und/oder der zweite Rippenabschnitt (10) in einem Winkel zu der Längsachse (11) des Schlauchnippels (6) und/oder in einem Winkel zu einer oder der Umfangsrichtung des Schlauchnippels (6) ausgerichtet ist/sind und/oder
- wobei die wenigstens eine Rippe (8) und/oder die weitere Rippe (13, 26) eine variierende Dicke und/oder Höhe (h1, h2) aufweist/aufweisen.

13. Anschlusskupplung (1) nach einem der vorangehenden Ansprüche, wobei die wenigstens eine Rippe (8) und/oder die weitere Rippe (13, 26) ein Rippenprofil (20) aufweist/aufweisen, welches in seinem Fußbereich (21) und/oder in seinem Kopfbereich (22) abgerundet oder eckig ausgebildet ist.

14. Anschlusskupplung (1) nach einem der vorangehenden Ansprüche, wobei die wenigstens eine Rippe (8) und die weitere Rippe (13, 26) voneinander abweichende Rippenprofile (20) aufweisen.

## Claims

1. **Connection coupling (1)** for a hose (3), having
- a hose nipple (6), on which a ribbed structure (7) with at least one rib (8) is formed,
- wherein the at least one rib (8) has in its course at least one change in direction to prevent twisting,
- wherein the at least one rib (8) has at least one retaining section (12) for absorbing tensile forces, which section extends in a radial plane which is perpendicular to a longitudinal axis (11) of the hose nipple (6),
- wherein the at least one rib (8) is designed to run around the hose nipple (6),
- wherein the ribbed structure (7) has a further rib (13) which runs around the hose nipple (6) and has at least one change of direction in its course,
- **characterized in that** the two ribs (7, 13) are arranged at a complete distance from one another, so that a region running around in the radial plane between the two ribs (8, 13) on the hose nipple (6) is designed to be free of ribs.

2. Connection coupling (1) according to claim 1, wherein the at least one rib (8) has a first rib section (9) and a second rib section (10), wherein the first rib section (9) conforms to a first running direction (17) and wherein the second rib section (10) conforms to a second running direction (18), and wherein the first running direction (17) is aligned at an angle to the second running direction (18).

3. Connection coupling (1) according to claim 1 or 2, wherein the at least one rib (8) is designed as a rib (8) running around without crossing and runs obliquely in at least one rib section (9, 10) with respect to a circumferential direction of the hose nipple (6).

4. Connection coupling (1) according to one of the preceding claims, wherein the at least one rib (8) is formed on a base body (14) which has a cylindrical or non-cylindrical, in particular non-circular, tapered, convex or concave shape.

5. Connection coupling (1) according to claim 2, wherein the at least one further circumferential rib (26) has a further rib section (27) which is aligned at an angle (28) to the first or second (9, 10) of the at least one rib (8).

6. Connection coupling (1) according to one of the preceding claims, wherein the at least one rib (8) is designed to run around the hose nipple (6) in a closed and/or cross-free manner.

7. Connection coupling (1) according to claim 2, wherein the first rib section (9) adjoins the second rib section (10).

8. Connecting coupling (1) according to claim 2, wherein the at least one retaining section (12) is bounded at a first end by the first rib section (9) and/or at a second end by the second rib section (10).

9. Connection coupling (1) according to one of the preceding claims, **characterized in that** the further rib (13) running around the hose nipple (6) extends at a constant distance from the at least one rib (8) or offset by an angle of rotation with respect to the at least one rib (8), in particular wherein the further rib (13) has a first rib section (9) and a second rib section (10), wherein the first rib section (9) conforms to a first running direction (17) and the second rib section (10) conforms to a second running direction (18), and wherein the first running direction (17) is aligned at an angle to the second running direction (18).

10. Connection coupling (1) according to one of the preceding claims, wherein the hose nipple (6) has a push-on aid (16), the maximum outer diameter of which is at least equal to a maximum outer diameter of the ribbed structure (7).

11. Connection coupling (1) according to one of the preceding claims, wherein the hose nipple (6) has a mold parting line which defines a demolding direction, wherein the at least one rib (8) is aligned at each point of its course with respect to the demolding direction in such a way that no undercuts occur.

12. Connecting coupling (1) according to claim 2, wherein the first rib section (9) and/or the second rib section (10) is/are aligned at an angle to the longitudinal axis (11) of the hose nipple (6) and/or at an angle to one or the circumferential direction of the hose nipple (6) and/or
- wherein the at least one rib (8) and/or the further rib (13, 26) has/have a varying thickness and/or height (h1, h2).

13. Connection coupling (1) according to one of the preceding claims, wherein the at least one rib (8) and/or the further rib (13, 26) has/have a rib profile (20) which is rounded or angular in its foot region (21) and/or in its head region (22).

14. Connection coupling (1) according to one of the preceding claims, wherein the at least one rib (8) and the further rib (13, 26) have rib profiles (20) which differ from one another.

## Revendications

1. Coupleur de raccordement (1) pour une gaine (3), avec
• un raccord de gaine (6) sur lequel est formée une structure nervurée (7) avec au moins une nervure (8),
• dans lequel l'au moins une nervure (8) présente sur son parcours au moins un changement de direction pour empêcher une rotation,
• dans lequel l'au moins une nervure (8) présente au moins une section de maintien (12) destinée à absorber des forces de traction, qui passe dans un plan radial perpendiculaire à un axe longitudinal (11) du raccord de gaine (6),
• dans lequel l'au moins une nervure (8) fait le tour du raccord de gaine (6),
• dans lequel la structure nervurée (7) comporte une autre nervure (13) qui fait le tour du raccord de gaine (6) et qui présente sur son parcours au moins un changement de direction,
**caractérisé en ce que** les deux nervures (7, 13) sont disposées complètement à distance l'une de l'autre, de sorte qu'une zone faisant le tour dans le plan radial entre les deux nervures (8, 13) sur le raccord de gaine (6) est réalisée sans nervures.

2. Coupleur de raccordement (1) selon la revendication 1, dans lequel l'au moins une nervure (8) comporte une première section de nervure (9) et une deuxième section de nervure (10), la première section de nervure (9) suivant une première direction de parcours (17) et la deuxième section de nervure (10) une deuxième direction de parcours (18) et la première direction de parcours (17) étant orientée selon un angle par rapport à la deuxième direction de parcours (18).

3. Coupleur de raccordement (1) selon la revendication 1 ou 2, dans lequel l'au moins une nervure (8) est réalisée comme une nervure (8) circonférentielle sans croisement et passe à l'oblique dans au moins une section de nervure (9, 10) par rapport à un sens de la circonférence du raccord de gaine (6).

4. Coupleur de raccordement (1) selon l'une des revendications précédentes, dans lequel l'au moins une nervure (8) est formée sur un corps de base (14) qui a une forme cylindrique ou non cylindrique, en particulier non ronde, resserrée, convexe ou concave.

5. Coupleur de raccordement (1) selon la revendication 2, dans lequel l'au moins une autre nervure circonférentielle (26) comporte une autre section de nervure (27) orientée selon un angle (28) par rapport à la première ou la deuxième (9, 10) de l'au moins une nervure (8).

6. Coupleur de raccordement (1) selon l'une des revendications précédentes, dans lequel l'au moins une nervure (8) fait le tour du raccord de gaine (6) et est réalisée de façon fermée et/ou sans croisement.

7. Coupleur de raccordement (1) selon la revendication 2, dans lequel la première section de nervure (9) est limitrophe de la deuxième section de nervure (10).

8. Coupleur de raccordement (1) selon la revendication 2, dans lequel l'au moins une section de maintien (12) est délimitée à une première extrémité par la première section de nervure (9) et/ou à une deuxième extrémité par la deuxième section de nervure (10).

9. Coupleur de raccordement (1) selon l'une des revendications précédentes, **caractérisé en ce que** l'autre nervure (13) faisant le tour du raccord de gaine (6) se trouve à une distance constante par rapport à l'au moins une nervure (8) ou est décalée d'un angle de rotation par rapport à l'au moins une nervure, l'autre nervure (13) comportant en particulier une première section de nervure (9) et une deuxième section de nervure (10) dont la première section de nervure (9) suit une première direction de parcours (17) et la deuxième section de nervure (10) une deuxième direction de parcours (18), la première direction de parcours (17) étant orientée selon un angle par rapport à la deuxième direction de parcours (18).

10. Coupleur de raccordement (1) selon l'une des revendications précédentes, dans lequel le raccord de gaine (6) comporte une aide à la déconnexion (16) dont le diamètre extérieur maximal est au moins égal à un diamètre extérieur maximal de la structure nervurée (7).

11. Coupleur de raccordement (1) selon l'une des revendications précédentes, dans lequel le raccord de gaine (6) comporte une ligne de séparation d'outil qui définit une direction de déformation, l'au moins une nervure (8) étant orientée par rapport à la direction de déformation, en tout point de son parcours, de telle façon qu'il ne se crée pas de contre-dépouilles.

12. Coupleur de raccordement (1) selon la revendication 2, dans lequel la première section de nervure (9) et/ou la deuxième section de nervure (10) sont orientées selon un angle par rapport à l'axe longitudinal (11) du raccord de gaine (6) et/ou orientées selon un angle par rapport à une ou la direction de circonférence du raccord de gaine (6) et/ou dans lequel l'au moins une nervure (8) et/ou l'autre nervure (13, 26) présentent une épaisseur et/ou une hauteur (h1, h2) variables.

13. Coupleur de raccordement (1) selon l'une des revendications précédentes, dans lequel l'au moins une nervure (8) et/ou l'autre nervure (13, 26) présentent un profil de nervure (20) qui est arrondi ou anguleux dans sa partie de pied (21) et/ou dans sa partie de sommet (22).

14. Coupleur de raccordement (1) selon l'une des revendications précédentes, dans lequel l'au moins une nervure (8) et l'autre nervure (13, 26) présentent des profilés de nervure (20) différents l'un de l'autre.
